# EUROPEAN PATENT APPLICATION

(11) **EP 0 831 191 A1**
(43) Date of publication of application: **25.03.1998**
(21) Application number: 97907103.2
(22) Date of filing: 06.03.1997
(51) Int. Cl.: E04H 7/30, E04H 7/22

(54) **IMPROVEMENTS TO PREFABRICATED MODULAR SILOS FOR PULVERULENT AND/OR GRANULAR MATERIALS**

(30) Priority: 06.03.1996 ES 9600053
(71) Applicant: Perez-Manglano Soto, Julio, 46003 Valencia (ES); Dominguez Toran, Gonzalo, 28033 Madrid (ES)
(72) Inventor: Perez-Manglano Soto, Julio, 46003 Valencia (ES); Dominguez Toran, Gonzalo, 28033 Madrid (ES)
(74) Representative: Carpintero Lopez, Francisco
(86) International application number: ES9700051
(87) International publication number: WO9733058

(57) **Abstract**

The improvements are applicable in the type of silo made up of modular prefabricated panels which are joined together collaterally forming the corresponding closure at the lateral surface of the silo. Each panel consists of two parts, a lower one (1) of reinforced concrete which is anchored to the corresponding foundation, and an upper one (2) which is metal and is formed from a corrugated or other appropriately shaped core (4) completed by lateral sections (7) on both sides and plates (5) and (6) which form the inner and outer sides, respectively, the result being that each upper part (2) of metallic nature is light enough to be manipulated by small cranes and is able to be fixed by welding or any conventional system to the lower part (1) of the respective panel.

## Description

### OBJECT OF THE INVENTION

The invention concerns a series of improvements to the construction of prefabricated modular grain silos, to those which may contain all types of powdered and grain products. The improvements are, essentially, of the relevant prefabricated panels, the collateral and correlative joints of which determine the lateral closure of the silo, which then would be completed with a suitable cover.

According to the improvements of the invention, the panels are made up of two parts, a lower concrete based one, and an upper metal one, allowing the silo to be built more simply without reducing its capacity.

It is envisaged that the silo be sited and assembled in any place, area or country, where particular granular and/or powdered products might need to be stored.

### BACKGROUND OF THE INVENTION

In the Spanish invntion patent n^{º} 9202551 (publication no 2.063.669) a prefabricated modular grain silo is described, the lateral closure of which is formed by a series of prefabricated concrete panels made up perimetrically of a base framework of back to back sections, in such a way that these panels are joined together, either by their longitudinal sides and free from the perimetrical back to back sections, or by intermediate sections, which can fit other panels, etc, in such a way that the panels used either way would always be uneven, corrugated etc., either regular or irregular in shape, making up the closed outline required for the silo.

These panels come fixed to metal plates anchored to a lower foundation, while the upper panels have their corresponding closure higher up, which is preferably and fundamentally made up of a basically prefabricated tridimensional spatial structure which even acts as an upper resistance ferruling.

The silo described in this Spanish invention patent (publication no 2.063.669) can be taken apart and put together again and most of its parts are reusable, for this reason it is very useful in places like ports, or areas where products need to be stored temporarily, for example in farms, etc., as its easy assembly and disassembly makes the silo useful in any area it might be required.

However, the prefabricated reinforced concrete based panels are very heavy, requiring the use of heavy cranes.

These cranes are available without difficulty at any time in developed countries, should the silo need to be assembled. However, if the silo is to be assembled in underdeveloped countries, where heavy cranes are not usually available but where small cranes can be found, the assembly of the silo designed according to the Spanish patent of invention n^{º} 9202551 (publication no 2.063.669) would be difficult, as in most cases it is necessary to transport heavy cranes to the specific place for assembly, thus obviously increasing the final costs of the silo.

In such circumstances, according to this patent of invention, silos that can be put up in certain places, countries or areas, are of small capacity, as it is anticipated that rather smaller panels are needed so that they can be assembled using small and average powered cranes, as no heavy cranes are available.

### DESCRIPTION OF THE INVENTION

The recommended improvements are applicable to the type of prefabricated modular silo referred to in the previous section, but resolving the aforementioned problems, allowing the construction of large capacity silos, using small cranes, which are easily obtained in any country or area.

More specifically, one of the improvements to the invention is the division of the panel into two, a lower concrete part duly anchored to the foundation, as described in the Spanish patent of invention no 9202551, and an upper metallic part which will be welded to the lower part.

This upper part, which would logically be a metallic panel, will be made up of a corrugated or appropriately shaped plate web, which has corresponding sections that make up the lateral closures fixed to its sides, while between these, corrugated covering plates are fixed to both of them, thus forming a panel that can be filled with polyurethane insulating foam or any other insulating material to increase the panel*'*s own insulation. These covering plates for the corrugated web can be phenolic panels or any other appropriate type of covering plate.

This upper panel made up in this way is less heavy and therefore easy to handle using small cranes.

The silo will be completed with a suitable cover, a traditional one acting as upper resistance ferruling.

Another improvement of the invention is that at a determined height, more specifically at a third of the total height of the panel formed by both parts, for being this the area where the weight is highest, and fitting exactly onto the concrete part, a perimetral ring to increase the rigidity of the silo can optionally be used, a ring which will obviously encircle all the joined panels forming the lateral closure of the silo.

In addition, this perimetrical ring can be used as a support base or a walkway for the people assembling the upper metal panels.

Consequently, the division of each panel into two parts, a lower concrete one and an upper metallic one or one made of a sheet, allows the construction of large-capacity silos without the need for heavy cranes, as this division of each panel into two parts makes assembly much easier and simpler, without the difficulties involved in mounting one-piece panels that are entirely made of reinforced concrete.

### DESCRIPTION OF THE DRAWINGS

To complete this description and to help towards a better understanding of the characteristics of the invention, we attach as an integral part of this specification a set of illustrative and non-restrictive drawings representing the following:
Figure 1.- shows a diagrammatic representation in axonometric perspective of a part of the lateral closure of the silo, on the basis of a contiguous succession of panels which, as can be seen, are divided into two parts, upper and lower, the lower parts being duly anchored to fixed plates on a conventional foundation.
Figure 2.- Shows a view in longitudinal section of the upper part of the panel on a basis of a corrugated sheet with sections and closure plates.
Figure 3. - Shows a detail in perspective of the corrugated or uneven metallic sheet between two lateral sections, forming the upper part of the panel, without the lateral closure plates.
Figure 4.- Shows diagrammatic representations in plan view of the poligonal or uneven contour of a silo obtained in line with the invention in different forms, circular or poligonal, in which the perimetrical ring which will be placed on the lower or concrete part can be seen.

### PREFERABLE EMBODIMENT OF THE INVENTION

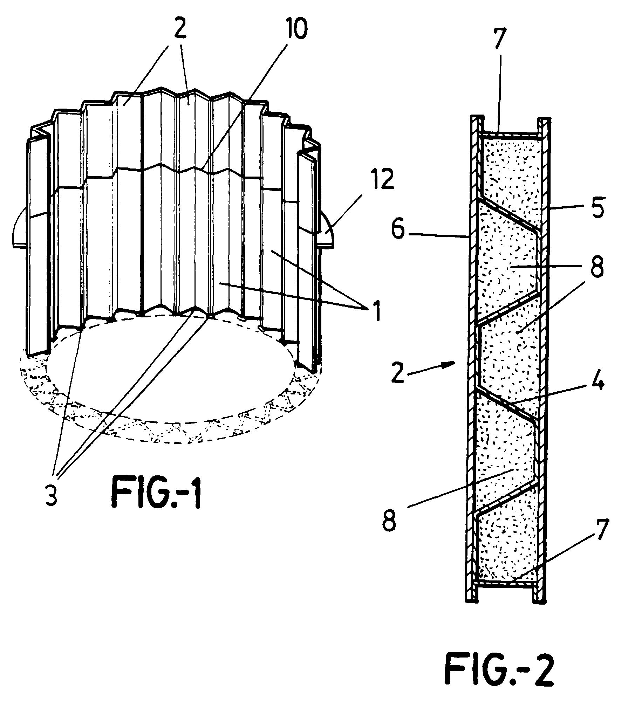

From the above mentioned figures it can be seen how the lateral closure wall that constitutes a silo, following the improvements, is obtained on the basis of a series of vertical panels, each one of which includes two parts, a lower part (1) and an upper one (2), the latter being fixed on the upper side of the lower part of each panel. These panels which are formed in each case by parts (1) and (2), are duly joined together forming an uneven line as represented in figure 1, or an undulated line or any other configuration as long as a closed contour is obtained, will form the corresponding wall of the lateral closure of the bi., which will be completed with a conventional cover which can act as upper resistance ferruling for the silo, while below, the lower part or extreme (1) of each panel is fixed to a plate (3) duly anchored to a foundation previously made in the ground.

Therefore, using these characteristics as a basis, the objective of the invention is that each panel, as described, is made up of two parts, (1) and (2), in such a way that the lower part (1) will be of reinforced concrete with a metallic perimetrical closure, while the upper part (2) is metallic and much lighter than the lower part (1), being easy to manage with small cranes and also easily assembled by welding it onto the lower part (1).

Thus, this upper part (2) of each panel forms what can be considered a metal panel formed by a corrugated plate web, uneven or of an appropriate shape (4), which has respective covering plates (5) and (6) on each side, the first of which is designed to define the inner side of the panel (2), while the other will be the outer side of this panel (2). These covering plates can be made of phenolic resin or any other appropriate material comsiloing the necessary characteristics.

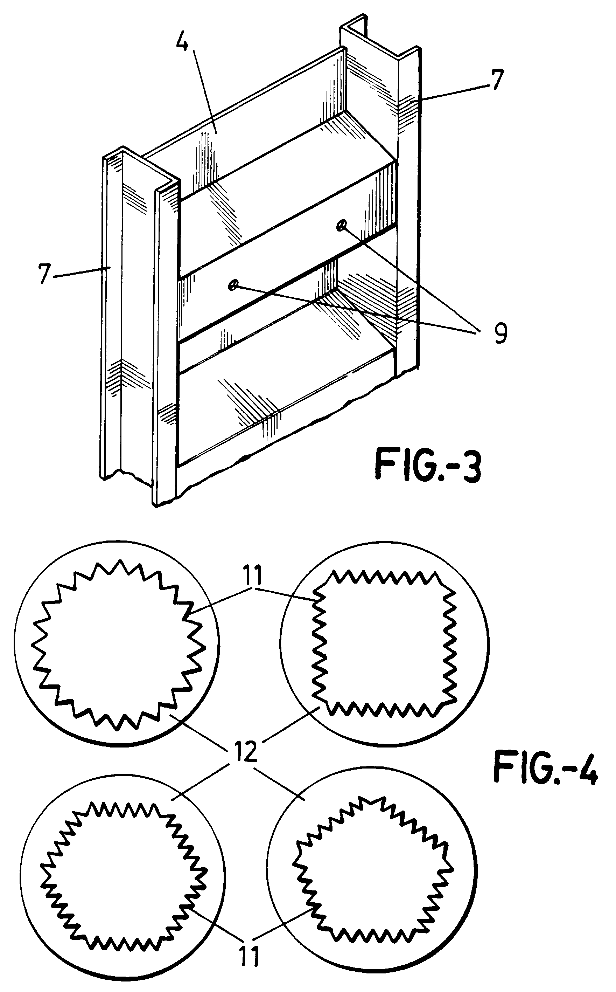

In addition, in line with the lateral sides, the corrugated sheet (4) includes back to back sections (7) on both sides, with optional concavity to the outside, as can clearly be seen in figure 3, so that between plates (5) and (6) and sections (7) a closed permetrical contour is made where the metal sheet (4) is placed forming the panel core (2), the cavities of which can be filled with polyurethane insulating foam or any other adequate component with insulating qualities, to give the panel ideal insulation.

Furthermore, the panels (2) have orifices (9) designed to support the corresponding covering panels, that is, those that form the cover of the silo that logically has to close its upper part.

When consisting of metal covering panels, the panel itself has windows superimposed on areas with corrugated sheeting (4), more specifically on the extreme lateral parts, and the corresponding welds are applied to these windows as a firm support for the walls.

When consisting of phenolic covering panels, these are fastened to the basic structure by the application of high strength adhesive polyurethane putty which forms a completely smooth finish to the walls.

The panels (2) are joined to the lower panels (1) by welding or any other conventional system, thus forming the line (10) of the join between the two panelled parts (1) and (2).

The perimeter (11), which defines the lateral closure wall of the silo to be assembled, is reinforced by an external ring (12) which should be placed at a third from the base, that is of the total height of the panel formed by parts (1) and (2), and logically corresponding to the concrete part (1) as this height corresponds precisely to the maximum weight that the inner silo wall has to bear, given that it is known that the weight distribution in a silo is triangular and the weight is at its heaviest at a third of its height, so that the placing of a external perimetral ring (12) in this area increases the silo's own rigidity and thus gives maximum guarantee of strength.

As any of the metal parts (2) forming the upper part of each panel is much lighter than the lower concrete parts (1), once the latter are fixed in their corresponding plates (3) anchored to the foundation, the former, that is the metal parts or panels (2), can be manipulated without great difficulty using small cranes, making it possible to assemble large-capacity silos in any place, area or country, irrespective of the availability of heavy cranes.

It is not considered necessary to extend this description for any expert in the material to understand the range of the invention and the advantages gained from it.

The materials, form, shape and availability of its elements will be subject to variation without this involving any alteration to the essence of the invention.

The terms used in this paper should be understood in the broadest, unlimited sense.

## Claims

1. Improvements introduced to prefabricated modular grain silos, which, being of the type based on prefabricated modular panels which are joined together collaterally following an uneven regular or irregular path, this closed path being to determine the lateral closure of the silo itself which is completed with an upper closing cover, the lower part of the panels being fixed to plates duly anchored to a previous foundation in the ground itself, are essentially characterised in that each panel of the lateral closure of the silo is made up of two parts, (1) and (2), the lower part (1) being of reinforced concrete, while the upper part (2) is made of metal and is fixed onto the lower part (1) using any conventional system, once this is anchored to its corresponding foundation; with the special feature that the upper part (2) of each panel is made up of a corrugated or otherwise appropriately shaped core (4), that on its longitudinal sides back to back (7) sections are fixed concaving towards the outside, so that laterally this corrugated sheet (4) is covered by plates (5) and (6) on both sides, determining the inner and outer sides of this upper part (2) of the panel itself.

2. Improvements introduced in modular prefabricated grain silos, according to claim 1, characterised in that the cavities (8) formed between the sheet (4) making up the core and the closure plates (5) and (6), as well as the lateral sections (7) can be filled with an insulating material.

3. Improvements introduced in modular prefabricated grain silos, according to previous claims, characterised in that the core sheeting (4) of the upper part (2) of the panel includes orifices (9) to support the corresponding panels making up the upper closure cover.

4. Improvements introduced in modular prefabricated grain silos, according to claims 1 and 2, characterised in that when the covering panels are of metal, they have windows for fastening, which matching the inner plate (4) are used for soldering and thus ideal fastening.

5. Improvements introduced in modular prefabricated grain silos, according to claims 1 and 2, characterised in that when the covering panels to be fastened to the panel structure are phenolic, a highly adhesive polyurethane putty is applied to them.

6. Improvements introduced in modular prefabricated grain silos, according to claim 1, characterised in that the corresponding silo has a perimentral ring that corresponds to the lower concrete part (1) and that increases the rigidity of the silo itself; having foreseen that this perimetral ring is best situated at approximately a third of the total height of the panel that forms the lower part (1) with the upper part (2) or the total height of the silo, as this is the area that corresponds to that of maximum weight bearing in the event of filling the silo.
